# EUROPEAN PATENT APPLICATION

(11) **EP 4 600 274 A1**
(43) Date of publication of application: **13.08.2025**
(21) Application number: 23874926.1
(22) Date of filing: 04.10.2023
(51) Int. Cl.: C08F 20/22, D06M 15/277, C09K 3/18

(54) **POLYMER AND WATER-REPELLENT OILPROOF COMPOSITION**

(30) Priority: 04.10.2022 JP 2022160516
(71) Applicant: DAIKIN INDUSTRIES, LTD., Osaka-shi, Osaka 530-0001 (JP)
(72) Inventor: KISHIKAWA, Yosuke, Osaka-Shi, Osaka 530-0001 (JP); HOSHIYA, Naoyuki, Osaka-Shi, Osaka 530-0001 (JP); ISHIHARA, Sumi, Osaka-Shi, Osaka 530-0001 (JP)
(74) Representative: Hoffmann Eitle
(86) International application number: PCT/JP2023/036297
(87) International publication number: WO 2024/075801

(57) **Abstract**

Provided is a polymer comprising a repeating unit derived from a monomer (a) represented by general formula: R¹-R²-(CH₂)ₚ-O-R³ wherein R¹ is -CH₃, -CH₂F, -CHF₂, -CH₂I, or -CHFI, R² is an alkylene group having 1 to 49 carbon atoms consisting of unit represented by -CFH-, an alkylene group having 2 to 49 carbon atoms consisting of unit represented by -CFH- and unit represented by -CH₂-, or an alkylene group having 3 to 49 carbon atoms consisting of unit represented by -CFH-, unit represented by -CH₂-, and unit represented by -CHI-, p is an integer of 0 to 2, and R³ is an organic residue having an ethylenically unsaturated polymerizable group.

## Description

### TECHNICAL FIELD

The present disclosure relates to a polymer and a water-repellent oil-resistant agent composition.

### BACKGROUND ART

Patent Document 1 discloses a water- and oil-repellent composition essentially containing a copolymer substantially formed of a polymerization unit of the following monomer (a) and a polymerization unit of the following monomer (b).

Monomer (a): a monomer having a polyfluoroalkyl group in which a microcrystal derived from the polyfluoroalkyl group of the homopolymer of the monomer has no melting point or has a melting point of 50°C or less.

Monomer (b): a monomer having an organic group other than the polyfluoroalkyl group in which a microcrystal derived from the organic group of the homopolymer has a melting point of 30°C or more.

### RELATED ART

### PATENT DOCUMENTS

Patent Document 1: International Publication No. 2002/083809

### SUMMARY OF THE INVENTION

### PROBLEM TO BE SOLVED BY THE INVENTION

An object of the present disclosure is to provide a polymer that exhibits water-repellency or oil resistance, and a water-repellent oil-resistant agent composition that can impart water-repellency or oil resistance to an article.

### MEANS FOR SOLVING THE PROBLEM

The present disclosure provides a polymer comprising a repeating unit derived from a monomer (a) represented by general formula: R¹-R²-(CH₂)ₚ-O-R³ wherein R¹ is -CH₃, -CH₂F, - CHF₂, -CH₂I, or -CHFI, R² is an alkylene group having 1 to 49 carbon atoms consisting of unit represented by -CFH-, an alkylene group having 2 to 49 carbon atoms consisting of unit represented by -CFH- and unit represented by -CH₂-, or an alkylene group having 3 to 49 carbon atoms consisting of unit represented by -CFH-, unit represented by -CH₂-, and unit represented by -CHI-, p is an integer of 0 to 2, and R³ is an organic residue having an ethylenically unsaturated polymerizable group.

### EFFECTS OF INVENTION

The present disclosure provides a polymer that exhibits favorable water-repellency or oil resistance, and a water-repellent oil-resistant agent composition that can impart favorable water-repellency or oil resistance to an article.

### DESCRIPTION OF EMBODIMENTS

Hereinafter, specific embodiments of the present disclosure will now be described in detail, but the present disclosure is not limited to the following embodiments.

Conventionally, fluorine-containing water- and oil-repellent agents containing a fluorine compound have been known. When a substrate such as a fiber product is treated using such a water- and oil-repellent agent, a substrate that exhibits water- and oil-repellency can be obtained.

Patent Document 1 discloses treating an article using an organic solvent solution or an aqueous dispersion with a polymer containing a polymerization unit of a polymerizable monomer containing a polyfluoroalkyl group within the molecule or a copolymer of the polymer with a further monomer, as a technique for simultaneously imparting water-repellency and oil-repellency to the surface. Further, Patent Document 1 discloses combining a polyfluoroalkyl group-containing monomer with a crystalline hydrocarbon monomer can enhance the crystallinity of the crystalline hydrocarbon monomer, the synergetic effect of enhancing the surface orientation allows water- and oil-repellency to be expressed even when no microcrystal derived from the polyfluoroalkyl group is present in the polymer or the melting point of the microcrystal is low, and the polyfluoroalkyl group is preferably a perfluoroalkyl group represented by F(CF₂)ₖ- wherein k is an integer of 1 to 20. However, a polymer that exhibits water-repellency without having a perfluoroalkyl group is desired.

The polymer of the present disclosure comprises a repeating unit derived from a monomer (a) represented by general formula: R¹-R²-(CH₂)ₚ-O-R³
wherein R¹ is -CH₃, -CH₂F, -CHF₂, -CH₂I, or -CHFI, R² is an alkylene group consisting of a unit represented by -CFH-, an alkylene group consisting of a unit represented by -CFH- and a unit represented by -CH₂-, or an alkylene group having 3 to 49 carbon atoms consisting of a unit represented by -CFH-, a unit represented by -CH₂-, and a unit represented by -CHI-, p is an integer of 0 to 2, and R³ is an organic residue having an ethylenically unsaturated polymerizable group.

Since the polymer of the present disclosure comprises a repeating unit derived from the monomer (a), water-repellency or oil resistance, preferably, water-repellency and oil resistance are expressed without having a perfluoroalkyl group or a perfluoroalkylene group. Therefore, the use of the polymer of the present disclosure enables a water-repellent oil-resistant agent composition that can impart favorable water-repellency or oil resistance, preferably favorable water-repellency and oil resistance to an article to be obtained.

### (a) Monomer

In the general formula representing the monomer (a), R¹ is -CH₃, -CH₂F, -CHF₂, -CH₂I, or -CHFI, and preferably -CH₂F, -CHF₂, or -CHFI. The polymer of the present disclosure has a feature that the group bonded to the organic residue (R³) having an ethylenically unsaturated polymerizable group has no CF₃-(trifluoromethyl group).

R² is an alkylene group consisting of a unit represented by -CFH-, an alkylene group consisting of a unit represented by -CFH- and a unit represented by -CH₂-, or an alkylene group consisting of a unit represented by -CFH-, a unit represented by -CH₂-, and a unit represented by -CHI-. The polymer of the present disclosure has a feature that the group bonded to the organic residue (R³) having an ethylenically unsaturated polymerizable group has no unit represented by -CF₂-.

The number of carbon atoms of R² is preferably 1 or more, more preferably 2 or more, and more preferably 3 or more, and preferably 49 or less, more preferably 11 or less, and even more preferably 10 or less.

When R² is an alkylene group consisting of a unit represented by -CFH-, examples of R² include -(CFH)ₙ₁- wherein n1 is an integer of 1 or more, preferably -(CFH)ₙ₁- wherein n1 is an integer of 3 to 49, and more preferably -CHF-(CHF-CHF)ₙ-wherein n is an integer of 1 to 24. n1 is preferably an integer of 2 to 10. n is preferably an integer of 1 to 5.

When R² is an alkylene group consisting of a unit represented by -CFH- and a unit represented by -CH₂-, examples of R² include -CHF-(CHF-CHF)ₙ-(CH2)ₘ- wherein n is an integer of 0 or more and m is an integer of 1 or more.

When R² is an alkylene group consisting of a unit represented by -CFH- and a unit represented by -CH₂-, R² is preferably -CHF-(CHF-CHF)ₙ-(CH₂)ₘ- wherein n is an integer of 1 to 24 and m is an integer of 1 or more, and more preferably - CHF-(CHF-CHF)ₙ-CH₂- wherein n is an integer of 1 to 24, or - CHF-(CHF-CHF)ₙ-CH₂CH₂- wherein n is an integer of 1 to 24. n is preferably an integer of 1 to 5. m is preferably 1 or 2.

When R² is an alkylene group consisting of a unit represented by -CFH-, a unit represented by -CH₂-, and a unit represented by -CHI-, R² is preferably -CHF-(CHF-CHF)ₙ-CH₂-CHI-(CH₂)_{q}- wherein n is an integer of 0 or more, and q is an integer of 1 or more. n is preferably 1 or 2. Q is preferably an integer of 1 to 24, more preferably an integer of 1 to 18, and even more preferably an integer of 1 to 12.

p is an integer of 0 to 2, and preferably 1 or 2.

R³ is an organic residue having an ethylenically unsaturated polymerizable group, and it is not limited as long as the organic residue contains a double bond between carbon and carbon. Specific examples thereof include organic residues having an ethylenically unsaturated polymerizable group such as CH₂=C(-X)-C(=O)-, CH₂=C(-X)-, and CH₂=C(-X)-CH₂-, and examples of X include a hydrogen atom, a methyl group, or a halogen atom. R³ may have various organic groups other than the ethylenically unsaturated polymerizable group. Examples of such organic groups include a chain hydrocarbon, a cyclic hydrocarbon, a polyoxyalkylene group, and a polysiloxane group, and these organic groups are optionally replaced by various substituents.

R³ is preferably a group represented by general formula:

CH₂=C(-X)-C(=O)-Y-Z-

wherein X is a hydrogen atom, a methyl group, or a halogen atom, Y is -O- or -NH-, and Z is a direct bond or a divalent organic group.

X is a hydrogen atom, a methyl group, or a halogen atom, and thus, the α position of (acrylate or methacrylate) of the monomer (a) may be, for example, a hydrogen atom, or is optionally replaced by a halogen atom or the like. Examples of X include a hydrogen atom, a methyl group, a fluorine atom, a chlorine atom, a bromine atom, and an iodine atom.

For example, Z may be a direct bond or a divalent organic group, and examples of the divalent organic group include:
an aliphatic group having 1 to 10 carbon atoms,
an aromatic group or cycloaliphatic group having 6 to 18 carbon atoms,
a -(CH₂)ₘ-N(R¹)SO₂-(CH₂)ₙ- group wherein m is an integer of 1 to 10, n is an integer of 0 to 10, and R¹ is an alkyl group having 1 to 18 carbon atoms,
a -CH₂CH(OZ¹)CH₂- group wherein Z¹ is a hydrogen atom or
R¹C(=O)-, and R¹ is an alkyl group having 1 to 18 carbon atoms,
a -CH₂CH(OZ¹)CH₂-(Ph-O)- group wherein Z¹ is a hydrogen atom or
R¹C(=O)-, R¹ is an alkyl group having 1 to 18 carbon atoms, and Ph is a phenylene group,
a -(CH₂)ₙ-Ph-O- group provided that Ph is a phenylene group, and n is an integer of 0 to 10,
a -(CH₂)ₘ-SO₂-(CH₂)ₙ- group wherein m is an integer of 1 to 10, and n is an integer of 0 to 10,
a -(CH₂)ₘ-OC(=O)N(R¹)-(CH₂)ₙ- group wherein m is an integer of 1 to 10, n is an integer of 0 to 10, and R¹ is an alkyl group having 1 to 18 carbon atoms,
a -(CH₂)ₘ-N(R¹)C(=O)O-(CH₂)ₙ- group wherein m is an integer of 1 to 10, n is an integer of 0 to 10, and R¹ is an alkyl group having 1 to 18 carbon atoms,
a -(CH₂)ₘ-C(=O)N(R¹)-(CH₂)ₙ- group wherein m is an integer of 1 to 10, n is an integer of 0 to 10, and R¹ is an alkyl group having 1 to 18 carbon atoms,
a -(CH₂)ₘ-(R¹)NC(=O)-(CH₂)ₙ- group wherein m is an integer of 1 to 10, n is an integer of 0 to 10, and R¹ is an alkyl group having 1 to 18 carbon atoms,
a -(CH₂)ₘ-(R¹)NC(=O)N(R¹)-(CH₂)ₙ- group wherein m is an integer of 1 to 10, n is an integer of 0 to 10, and R¹ is an alkyl group having 1 to 18 carbon atoms, or
a -(CH₂)ₘ-S-(CH₂)ₙ- group wherein m is an integer of 1 to 10, and n is an integer of 0 to 10.

The monomer (a) can be produced by reacting, for example, an alcohol represented by general formula: R¹-R²-(CH₂)ₚ-OH wherein R¹, R², and p are as described above, with a compound having an ethylenically unsaturated polymerizable group, and having a carboxyl group, a carboxylic acid halide group, an amide group, or an isocyanate group.

More specifically, the monomer (a) can be produced by reacting the alcohol represented by the general formula: R¹-R²-(CH₂)ₚ-OH wherein R¹, R², and p are as described above, with a compound represented by general formula: CH₂=C(-X)-C(=O)-Y-Z-L¹¹ wherein X, Y, and Z are as described above, and L¹¹ is -OH, a halogen atom, -NH₂, or -NCO.

The alcohol represented by the general formula: R¹-R²-(CH₂)ₚ-OH can be produced by a production method in which CHF=CHF is added to methanol to produce an alcohol represented by general formula: CH₂F-CHF-(CHF-CHF)ₙ-CH₂OH wherein n is an integer of 0 or more.

n in the alcohol represents the degree of polymerization of CHF=CHF, and is an integer of 0 or more. n is, for example, an integer of 0 to 23, preferably an integer of 0 to 4.

The reaction of the methanol with CHF=CHF can be performed in the presence of a radical initiator. When the reaction is performed in the presence of a radical initiator, the radical initiator is decomposed to generate radicals, a generated radical draws out a hydrogen atom on the carbon atom to which the hydroxyl group of the methanol is bonded, to generate a methanol radical, and a reaction of adding CHF=CHF to the methanol radical (a so-called telomerization reaction) proceeds.

The radical initiator is preferably an organic peroxide, and preferable examples thereof include dialkyl peroxycarbonates such as diisopropyl peroxydicarbonate and di sec-butyl peroxydicarbonate; peroxyesters such as 2-ethylhexanoyl (tert-butyl) peroxide, t-butyl peroxyisobutyrate, and t-butyl peroxypivalate; and dialkyl peroxides such as di t-butyl peroxide.

The amount of CHF=CHF used is preferably 0.01 to 100 mol per 1 mol of the methanol.

The amount of the radical initiator used is preferably 0.01 to 2 mol per 1 mol of the methanol.

The reaction temperature of the methanol with CHF=CHF can be suitably selected, and is preferably -78 to 200°C. The reaction temperature of the methanol with CHF=CHF is preferably the decomposition temperature of the radical polymerization initiator or more, and preferably less than the decomposition temperatures of the substrate and the product.

The reaction pressure of the methanol with CHF=CHF can be suitably selected, and is preferably 0 to 5.0 MPaG. The reaction time of the methanol with CHF=CHF can be suitably selected, and is preferably 0.1 to 96 hours.

The alcohol represented by the general formula: R¹-R²-(CH₂)ₚ-OH can be produced by a production method including:
a step (5) of reacting CHF=CHF with an iodide compound represented by general formula: X¹I wherein X¹ is H or F to produce a first fluorine-containing alkyliodide represented by general formula: R¹-CHF-I wherein R¹ is -CH₂F or -CHF₂, and adding CHF=CHF to the first fluorine-containing alkyliodide to produce a second fluorine-containing alkyliodide represented by general formula: R¹-CHF-(CHF-CHF)ₙ-I wherein R¹ is as described above, and n is an integer of 1 or more,
a step (6) of adding ethylene to the first or second fluorine-containing alkyliodide to produce a third fluorine-containing alkyliodide represented by general formula: R¹-CHF-(CHF-CHF)ₙ-CH₂CH₂-I wherein R¹ is as described above, and n is an integer of 0 or more, and
a step (7) of reacting the third fluorine-containing alkyliodide with a fuming sulfuric acid, and hydrolyzing the resultant to produce an alcohol represented by general formula: R¹-CHF-(CHF-CHF)ₙ-CH₂CH₂-OH wherein R¹ is as described above, and n is an integer of 0 or more.

In the step (5), the second fluorine-containing alkyl iodide represented by the general formula: R¹-CHF-(CHF-CHF)ₙ-I wherein R¹ is as described above and n is an integer of 1 or more is produced by reacting CHF=CHF with an iodide compound represented by general formula: X¹I wherein X¹ is H or F to produce the first fluorine-containing alkyl iodide represented by general formula: R¹-CHF-I wherein R¹ is -CH₂F or -CHF₂, and adding CHF=CHF to the first fluorine-containing alkyl iodide.

The amount of the iodide compound used is preferably 0.5 to 4 mol per 1 mol of CHF=CHF.

The reaction of CHF=CHF with the iodide compound can be performed without a solvent or in a solvent.

The reaction temperature of CHF=CHF with the iodide compound can be suitably selected, and is preferably -78 to 200°C. The reaction pressure of CHF=CHF with the iodide compound can be suitably selected, and is preferably 0 to 5.0 MPaG. The reaction time of CHF=CHF with the iodide compound can be suitably selected, and is preferably 0.1 to 96 hours.

The first fluorine-containing alkyl iodide represented by the general formula: R¹-CHF-I wherein R¹ is -CH₂F or -CHF₂ is produced by the reaction of CHF=CHF with the iodide compound. In the step (5), CHF=CHF is then added to the first fluorine-containing alkyl iodide.

The reaction of the first fluorine-containing alkyl iodide with CHF=CHF is a telomerization reaction in which the first fluorine-containing alkyl iodide is a telogen and CHF=CHF is a taxogen, and this reaction produces the second fluorine-containing alkyl iodide.

n in the second fluorine-containing alkyl iodide represents the degree of polymerization of CHF=CHF, and is an integer of 1 or more. n is preferably an integer of 1 to 24, more preferably an integer of 1 to 5.

The reaction of the first fluorine-containing alkyl iodide with CHF=CHF can be performed in the presence of a radical initiator. Examples of the radical initiator include organic peroxides and azo compounds.

Examples of the organic peroxide include dialkyl peroxycarbonates such as diisopropyl peroxydicarbonate and di sec-butyl peroxydicarbonate; peroxyesters such as 2-ethylhexanoyl (tert-butyl) peroxide, t-butyl peroxyisobutyrate, and t-butyl peroxypivalate; and dialkyl peroxides such as di t-butyl peroxide.

Examples of the azo compound include
azobisisobutyronitrile.

The amount of CHF=CHF used is preferably 0.01 to 100 mol per 1 mol of the fluorine-containing alkyl iodide.

The amount of the radical initiator used is preferably 0.01 to 2 mol per 1 mol of the fluorine-containing alkyl iodide.

The reaction temperature of the first fluorine-containing alkyl iodide with CHF=CHF can be suitably selected, and is preferably -78 to 200°C. The reaction temperature of the first fluorine-containing alkyl iodide with CHF=CHF is preferably the decomposition temperature of the radical polymerization initiator or more, and is preferably less than the decomposition temperatures of the substrate and the product.

The reaction pressure of the first fluorine-containing alkyl iodide with CHF=CHF can be suitably selected, and is preferably 0 to 5.0 MPaG. The reaction time of the first fluorine-containing alkyl iodide with CHF=CHF can be suitably selected, and is preferably 0.1 to 96 hours.

In the step (6), the third fluorine-containing alkyl iodide represented by the general formula: R¹-CHF-(CHF-CHF)ₙ-CH₂CH₂-I wherein R¹ is as described above and n is an integer of 0 or more is produced by producing the first or second fluorine-containing alkyl iodide represented by the general formula: R¹-CHF-(CHF-CHF)ₙ-I wherein R¹ is as described above, and n is an integer of 0 or more by the step (5), and then adding ethylene to the first or second fluorine-containing alkyliodide.

R¹ in the third fluorine-containing alkyl iodide is the same as R¹ in the first or second fluorine-containing alkyl iodide, and is -CH₂F or -CHF₂.

n in the third fluorine-containing alkyl iodide is an integer of 0 or more. The preferable range of n in the third fluorine-containing alkyl iodide is preferably an integer of 0 to 24, more preferably an integer of 0 to 5.

The reaction of the first or second fluorine-containing alkyl iodide with ethylene can be performed in the presence of a metal catalyst. Examples of the metal catalyst include copper.

The reaction of the first or second fluorine-containing alkyl iodide with ethylene can be performed in the presence of a compound generating radicals. Examples of such a compound include organic peroxides and azo compounds.

Examples of the organic peroxide include dialkyl peroxycarbonates such as diisopropyl peroxydicarbonate and di sec-butyl peroxydicarbonate; peroxyesters such as 2-ethylhexanoyl (tert-butyl) peroxide, t-butyl peroxyisobutyrate, and t-butyl peroxypivalate; and dialkyl peroxides such as di t-butyl peroxide.

Examples of the azo compound include
azobisisobutyronitrile.

The amount of ethylene used is preferably 0.01 to 100 mol per 1 mol of the first or second fluorine-containing alkyl iodide.

The amount of the compound generating radicals used is preferably 0.001 to 1 mol per 1 mol of the first or second fluorine-containing alkyl iodide.

The reaction temperature of the first or second fluorine-containing alkyl iodide with ethylene can be suitably selected, and is preferably 50 to 200°C. The reaction pressure of the first or second fluorine-containing alkyl iodide with ethylene can be suitably selected, and is preferably 0.1 to 5 MPaG. The reaction time of the first or second fluorine-containing alkyl iodide with ethylene can be suitably selected, and is preferably 0.1 to 96 hours.

In the step (7), the alcohol represented by the general formula: R¹-CHF-(CHF-CHF)ₙ-CH₂CH₂-OH wherein R¹ is as described above and n is an integer of 0 or more is produced by producing the third fluorine-containing alkyl iodide represented by the general formula: R¹-CHF-(CHF-CHF)ₙ-CH₂CH₂-I wherein R¹ is as described above and n is an integer of 0 or more by the step (6), then reacting the third fluorine-containing alkyl iodide with a fuming sulfuric acid, and then subjecting the resulting product to hydrolysis.

R¹ in the alcohol is the same as R¹ in the third fluorine-containing alkyl iodide, and is -CH₂F or -CHF₂.

n in the alcohol has the same value as n in the third fluorine-containing alkyl iodide, and is an integer of 0 or more. The preferable range of n in the alcohol is the same as the preferable range of n in the third fluorine-containing alkyl iodide.

The content of sulfur trioxide in the fuming sulfuric acid is not limited, and is preferably 10 to 90% by mass, more preferably 30 to 80% by mass, and even more preferably 50 to 70% by mass.

The amount of the fuming sulfuric acid used is, as an amount equivalent to sulfur trioxide in the fuming sulfuric acid, preferably 1 to 50 mol per 1 mol of the third fluorine-containing alkyl iodide.

The reaction temperature of the third fluorine-containing alkyl iodide with the fuming sulfuric acid can be suitably selected, and is preferably 0 to 90°C. The reaction pressure of the third fluorine-containing alkyl iodide with the fuming sulfuric acid can be suitably selected, and is preferably 0 to 10.0 MPaG. The reaction time of the third fluorine-containing alkyl iodide with the fuming sulfuric acid can be suitably selected, and is preferably 0.1 to 96 hours.

In the step (7), the reaction of the third fluorine-containing alkyl iodide with the fuming sulfuric acid produces a fluorine-containing alkylhydrogen sulfate represented by general formula: R¹-CHF-(CHF-CHF)ₙ-CH₂CH₂-OSO₃H wherein R¹ is as described above and n is an integer of 0 or more, and the fluorine-containing alkylhydrogen sulfate is then hydrolyzed to produce the fluorine-containing alcohol represented by the general formula: R¹-CHF-(CHF-CHF)ₙ-CH₂CH₂-OH wherein R¹ is as described above and n is an integer of 0 or more.

The hydrolysis of the fluorine-containing alkylhydrogen sulfate can be performed by using, for example, water or an aqueous sodium sulfite solution. The hydrolysis of the fluorine-containing alkylhydrogen sulfate can be performed by, for example, dropwise adding the aqueous sodium sulfite solution to a solution obtained through the reaction of the third fluorine-containing alkyl iodide with the fuming sulfuric acid (fluorine-containing alkylhydrogen sulfate-containing solution).

The amount of water or the aqueous sodium sulfite solution used is not limited, for example, as long as it is an amount capable of neutralizing the solution obtained through the reaction of the third fluorine-containing alkyl iodide with fuming sulfuric acid and required for hydrolyzing the fluorine-containing alkylhydrogen sulfate.

The hydrolysis temperature can be suitably selected, and is preferably 15 to 100°C. The hydrolysis time can be suitably selected, and is preferably 0.1 to 96 hours.

The alcohol represented by the general formula: R¹-R²-(CH₂)ₚ-OH can be produced by a production method including:
a step (8) of reacting CHF=CHF with I₂ and IF₅ to produce a fourth fluorine-containing alkyliodide represented by general formula: R¹-CHF-I wherein R¹ is -CHF₂ or -CHFI, and adding CHF=CHF to the fourth fluorine-containing alkyliodide to produce a fifth fluorine-containing alkyliodide represented by general formula: R¹-CHF-(CHF-CHF)ₙ-I wherein R¹ is as described above, and n is an integer of 1 or more, and
a step (9) of reacting the fourth or fifth fluorine-containing alkyliodide with an unsaturated compound represented by general formula: CH₂=CH-(CH₂)_{q}-OH wherein q is an integer of 1 or more to produce an alcohol represented by general formula: R¹-CHF-(CHF-CHF)ₙ-CH₂-CHI-(CH₂)_{q}-OH wherein R¹ is as described above, n is an integer of 0 or more, and q is an integer of 1 or more.

In the step (8), the fourth fluorine-containing alkyl iodide represented by general formula: R¹-CHF-I wherein R¹ is - CHF₂ or -CHFI is produced by reacting CHF=CHF with I₂ and IF₅, the fifth fluorine-containing alkyl iodide represented by the general formula: R¹-CHF-(CHF-CHF)ₙ-I wherein R¹ is as described above, and n is an integer of 1 or more can be produced by further adding CHF=CHF to the fourth fluorine-containing alkyl iodide.

The amount of I₂ and IF₅ used is preferably 0.5 to 2 mol per 1 mol of CHF=CHF.

The reaction of CHF=CHF with I₂ and IF₅ can be performed in a solvent.

The reaction temperature of CHF=CHF with I₂ and IF₅ can be suitably selected, and is preferably -78 to 200°C. The reaction pressure of CHF=CHF with I₂ and IF₅ can be suitably selected, and is preferably 0 to 5.0 MPaG. The reaction time of CHF=CHF with I₂ and IF₅ can be suitably selected, and is preferably 0.1 to 96 hours.

The reaction of the fourth fluorine-containing alkyl iodide with CHF=CHF is a telomerization reaction in which the fourth fluorine-containing alkyl iodide is a telogen and CHF=CHF is a taxogen, and this reaction produces the fifth fluorine-containing alkyl iodide.

n in the fifth fluorine-containing alkyl iodide represents the degree of polymerization of CHF=CHF, and is an integer of 1 or more. n is preferably an integer of 1 to 22, more preferably an integer of 1 to 7, even more preferably an integer of 1 to 5, and particularly preferably an integer of 1 to 3.

The reaction of the fourth fluorine-containing alkyl iodide with CHF=CHF can be performed in the presence of a radical initiator. Examples of the radical initiator include organic peroxides and azo compounds.

Examples of the organic peroxide include dialkyl peroxycarbonates such as diisopropyl peroxydicarbonate and di sec-butyl peroxydicarbonate; peroxyesters such as 2-ethylhexanoyl (tert-butyl) peroxide, t-butyl peroxyisobutyrate, and t-butyl peroxypivalate; and dialkyl peroxides such as di t-butyl peroxide.

Examples of the azo compound include
azobisisobutyronitrile.

The amount of CHF=CHF used is preferably 0.01 to 100 mol per 1 mol of the fluorine-containing alkyl iodide.

The amount of the radical initiator used is preferably 0.01 to 2 mol per 1 mol of the fluorine-containing alkyl iodide.

The reaction temperature of the fourth fluorine-containing alkyl iodide with CHF=CHF can be suitably selected, and is preferably -78 to 200°C. The reaction temperature of the fourth fluorine-containing alkyl iodide with CHF=CHF is preferably the decomposition temperature of the radical polymerization initiator or more, and preferably less than the decomposition temperatures of the substrate and the product.

The reaction pressure of the fourth fluorine-containing alkyl iodide with CHF=CHF can be suitably selected, and is preferably 0 to 5.0 MPaG. The reaction time of the fourth fluorine-containing alkyl iodide with CHF=CHF can be suitably selected, and is preferably 0.1 to 96 hours.

In the step (9), the alcohol represented by the general formula: R¹-CHF-(CHF-CHF)ₙ-CH₂-CHI-(CH₂)_{q}-OH wherein R¹ is as described above, n is an integer of 0 or more, and q is an integer of 0 or more is produced by reacting the fourth or fifth fluorine-containing alkyl iodide with an unsaturated compound represented by general formula: CH₂=CH-CH₂-OH.

R¹ in the alcohol is the same as R¹ in the fourth or fifth fluorine-containing alkyl iodide, and is -CHF₂ or -CHFI.

n in the alcohol is an integer of 0 or more. The preferable range of n in the alcohol is an integer of 0 to 22, preferably an integer of 0 to 7, more preferably an integer of 0 to 5, and even more preferably an integer of 0 to 3.

q in the alcohol is an integer of 1 or more. The preferable range of q in the alcohol is an integer of 1 to 24, preferably an integer of 1 to 18, and more preferably an integer of 1 to 12.

The reaction of the fourth or fifth fluorine-containing alkyl iodide with the unsaturated compound can be performed in the presence of a compound generating radicals. Examples of such a compound include organic peroxides and azo compounds.

Examples of the organic peroxide include dialkyl peroxycarbonates such as diisopropyl peroxydicarbonate and di sec-butyl peroxydicarbonate; peroxyesters such as 2-ethylhexanoyl (tert-butyl) peroxide, t-butyl peroxyisobutyrate, and t-butyl peroxypivalate; and dialkyl peroxides such as di t-butyl peroxide.

Examples of the azo compound include
azobisisobutyronitrile.

The amount of the unsaturated compound used is preferably 0.01 to 100 mol per 1 mol of the fourth or fifth fluorine-containing alkyl iodide.

The amount of the compound generating radicals used is preferably 0.001 to 1 mol per 1 mol of the fourth or fifth fluorine-containing alkyl iodide.

The reaction temperature of the fourth or fifth fluorine-containing alkyl iodide with the unsaturated compound can be suitably selected, and is preferably 50 to 200°C. The reaction pressure of the fourth or fifth fluorine-containing alkyl iodide with the unsaturated compound can be suitably selected, and is preferably 0.1 to 5 MPaG. The reaction time of the fourth or fifth fluorine-containing alkyl iodide with the unsaturated compound can be suitably selected, and is preferably 0.1 to 96 hours.

The obtained alcohol may be reduced to produce an alcohol represented by general formula: R¹-CHF-(CHF-CHF)ₙ-CH₂-CH₂-(CH₂)_{q}-OH wherein R¹, X, q, and n are as described above. The reduction can be performed by, for example, using a metal catalyst and hydrogen, or using zinc as a reducing agent.

### (b) Fluorine-free non-crosslinkable monomer

The polymer of the present disclosure may have a repeating unit derived from the fluorine-free non-crosslinkable monomer (b). The fluorine-free non-crosslinkable monomer (b) is a monomer that contains no fluorine atom and is not crosslinkable (or has no crosslinkable functional group). The fluorine-free non-crosslinkable monomer (b) is preferably a fluorine-free monomer having a carbon-carbon double bond. The fluorine-free non-crosslinkable monomer (b) is preferably a vinyl monomer containing no fluorine. The fluorine-free non-crosslinkable monomer (b) is generally a compound having a carbon-carbon double bond.

The preferable fluorine-free non-crosslinkable monomer (b) is represented by general formula:

CH₂=CA-T

wherein A is a hydrogen atom, a methyl group, or a halogen atom other than the fluorine atom, T is a hydrogen atom, a linear or cyclic hydrocarbon group having 1 to 30 carbon atoms, or a linear or cyclic organic group having 1 to 20 carbon atoms and having an ester bond, an amide bond, a urethane bond, or a urea bond.

Examples of the linear or cyclic hydrocarbon group having 1 to 30 carbon atoms include a linear or branched aliphatic hydrocarbon group having 1 to 20 carbon atoms, a cycloaliphatic group having 4 to 20 carbon atoms, an aromatic hydrocarbon group having 6 to 20 carbon atoms, and an aromatic aliphatic hydrocarbon group having 7 to 20 carbon atoms. T can be selected from a long-chain hydrocarbon group having 12 to 30 carbon atoms and a saturated cyclic hydrocarbon group.

Examples of the linear or cyclic organic group having 1 to 30 carbon atoms and having an ester bond include -C(=O)-O-Q and -O-C(=O)-Q wherein Q is a linear or branched aliphatic hydrocarbon group having 1 to 30 carbon atoms, a cycloaliphatic group having 4 to 20 carbon atoms, an aromatic hydrocarbon group having 6 to 20 carbon atoms, and an aromatic aliphatic hydrocarbon group having 7 to 20 carbon atoms.

Examples of the linear or cyclic organic group having 1 to 20 carbon atoms and having an amide bond, a urethane bond, or a urea bond include -C(=O)-NH-Q, -NH-C(=O)-Q, -NH-C(=O)-O-Q, -O-C(=O)-NH-Q, and -NH-CO-NH-Q wherein Q is a linear or branched aliphatic hydrocarbon group having 1 to 30 carbon atoms, a cycloaliphatic group having 4 to 20 carbon atoms, an aromatic hydrocarbon group having 6 to 20 carbon atoms, and an aromatic aliphatic hydrocarbon group having 7 to 20 carbon atoms.

Preferable examples of the fluorine-free non-crosslinkable monomer (b) include ethylene, vinyl acetate, acrylonitrile, styrene, polyethylene glycol (meth)acrylate, polypropylene glycol (meth)acrylate, methoxypolyethylene glycol (meth)acrylate, methoxypolypropylene glycol (meth)acrylate, and a vinyl alkyl ether. The fluorine-free non-crosslinkable monomer (b) is not limited to these examples.

For example, the fluorine-free non-crosslinkable monomer (b) may be a (meth)acrylate ester having an alkyl group. Alternatively, the number of carbon atoms of the alkyl group may be 1 to 30, and for example, may be 6 to 30 (e.g., 10 to 30). For example, the fluorine-free non-crosslinkable monomer (b) may be an acrylate represented by general formula:

CH₂=CA¹COOA²

wherein A¹ is a hydrogen atom, a methyl group, or a halogen atom other than the fluorine atom (e.g., a chlorine atom, a bromine atom, and an iodine atom), and A² is an alkyl group represented by CₙH₂ₙ₊₁ (n = 1 to 30).

For example, the fluorine-free non-crosslinkable monomer (b) may be a (meth)acrylate monomer having a cyclic hydrocarbon group. The (meth)acrylate monomer (B) having a cyclic hydrocarbon group is a compound having a (preferably monovalent) cyclic hydrocarbon group and a monovalent (meth)acrylate group. The monovalent cyclic hydrocarbon group and the monovalent(meth)acrylate group are directly bonded to each other. Examples of the cyclic hydrocarbon group include saturated or unsaturated monocyclic groups, polycyclic groups, bridged ring groups. The cyclic hydrocarbon group is preferably saturated. The number of carbon atoms of the cyclic hydrocarbon group is preferably 4 to 20. Examples of the cyclic hydrocarbon group include a cycloaliphatic group having 4 to 20, in particular, 5 to 12 carbon atoms, an aromatic group having 6 to 20 carbon atoms, and an aromatic aliphatic group having 7 to 20 carbon atoms. The number of carbon atoms of the cyclic hydrocarbon group is 15 or less, and particularly preferably, for example, 10 or less. A carbon atom in the ring of the cyclic hydrocarbon group is preferably directly bonded to the ester group in the (meth)acrylate group. The cyclic hydrocarbon group is preferably a saturated cycloaliphatic group. Specific examples of the cyclic hydrocarbon group include a cyclohexyl group, a t-butylcyclohexyl group, an isobornyl group, a dicyclopentany group, and a dicyclopentenyl group. The (meth)acrylate group is an acrylate group or a methacrylate group, and is preferably a methacrylate group. Specific examples of the monomer having a cyclic hydrocarbon group include cyclohexyl methacrylate, t-butylcyclohexyl methacrylate, benzyl methacrylate, isobornyl methacrylate, isobornyl acrylate, dicyclopentany methacrylate, dicyclopentanyl acrylate, and dicyclopentenyl acrylate.

The polymer of the present disclosure may have a repeating unit derived from a long-chain hydrocarbon group-containing fluorine-free monomer as the repeating unit derived from the fluorine-free non-crosslinkable monomer (b).

The long-chain hydrocarbon group-containing fluorine-free monomer has no fluoroalkyl group. The long-chain hydrocarbon group-containing fluorine-free monomer contains no fluorine atom.

The long-chain hydrocarbon group is a saturated or unsaturated group. The long-chain hydrocarbon group is preferably a saturated hydrocarbon group, and particularly preferably an alkyl group.

The long-chain hydrocarbon group is preferably a linear or branched hydrocarbon group having 7 to 40 carbon atoms. The number of carbon atoms of the linear or branched hydrocarbon group may be 10 to 40 or 12 to 40 or 18 to 40. The number of carbon atoms of the linear or branched hydrocarbon group is preferably 12 to 40, more preferably 12 to 30, in particular 18 to 28, and especially preferably 18 to 22 (or 18 to 24), and is generally a saturated aliphatic hydrocarbon group, and particularly preferably an alkyl group. The long-chain hydrocarbon group is particularly preferably a stearyl group, an icosyl group, or a behenyl group.

The long-chain hydrocarbon group-containing fluorine-free monomer is preferably a monomer represented by general formula:

CH₂=C(-X¹¹)-C(=O)-Y¹¹-R¹¹ₙ

wherein X¹¹ is a hydrogen atom, a monovalent organic group, or a halogen atom other than the fluorine atom, Y¹¹ is a divalent to tetravalent linking group having at least one group selected from -O- and -NH-, R¹¹ is a hydrocarbon group having 7 to 40 carbon atoms, and n is an integer of 1 to 3.

For example, X¹¹ may be a hydrogen atom, a methyl group, a halogen excluding the fluorine atom, a substituted or unsubstituted benzyl group, or a substituted or unsubstituted phenyl group. Examples of X¹¹ include a hydrogen atom, a methyl group, a chlorine atom, a bromine atom, an iodine atom, and a cyano group. X¹¹ is preferably a hydrogen atom, a methyl group, or a chlorine atom.

Y¹¹ is a single bond or a divalent to tetravalent group. Y¹¹ is preferably a single bond or a divalent group. Y¹¹ is preferably a divalent group at least containing at least one group selected from -O-, -NH-, -O-and -NH-, and at least one group selected from a hydrocarbon group having a carbon atom, -C₆H₆-, -C(=O)-, and -S(C=O)₂-. Examples of the hydrocarbon group having a carbon atom include -CH₂-, -CH=, or -C≡.

Examples of Y¹¹ as a divalent group include -Y'-, -Y'-C(=O)-, -C(=O)-Y'-, -Y'-C(=O)-Y'-, -Y'-C(=O)-Y'-, -Y'-R'-, - Y'-R'-Y'-, -Y'-R'-Y'-C(=O)-, -Y'-R'-C(=O)-Y'-, -Y'-R'-Y'-C(=O)-Y'-, or -Y'-R'-Y'-R'- wherein Y' is -O- or -NH-, and R' is -(CH₂)ₘ- (wherein m is an integer of 1 to 5), or -C₆H₆- (a phenylene group).

Specific examples of Y¹¹ as a divalent group include -O-, -NH-, -O-C(=O)-, -C(=O)-NH-, -NH-C(=O)-, -O-C(=O)-NH-, -NH-C(=O)-O-, -NH-C(=O)-NH-, -O-C₆H₆-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₆-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₆-, -NH-(CH₂)ₘ-NH-C₆H₆- wherein m is an integer of 1 to 5, in particular, 2 or 4.

Y¹¹ as a divalent group is even more preferably -O-, - NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH- wherein m is an integer of 1 to 5, and in particular, 2 or 4. Y¹¹ is particularly preferably -O-(CH₂)-NH-C(=O)-.

Y¹¹ as a divalent group is particularly preferably -O-, -NH-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH- wherein m is an integer of 1 to 5, and in particular, 2 or 4.

R¹¹ is preferably a linear or branched hydrocarbon group. For example, the hydrocarbon group may be, in particular, a linear hydrocarbon group. The hydrocarbon group is preferably an aliphatic hydrocarbon group, particularly preferably a saturated aliphatic hydrocarbon group, and especially preferably an alkyl group. The number of carbon atoms of the hydrocarbon group is preferably 12 to 30, for example, 16 to 26, and particularly preferably 18 to 22.

n is an integer of 1 to 3, and preferably 1.

When Y¹¹ has a tetravalent hydrocarbon group having a carbon atom, it is preferable that n = 3. When Y¹¹ has a trivalent hydrocarbon group having a carbon atom, it is preferable that n = 2. When Y¹¹ has no trivalent and tetravalent hydrocarbon groups having a carbon atom, n = 1.

Examples of the long-chain hydrocarbon group-containing fluorine-free monomer include:
(b1) an acrylic monomer containing a divalent group represented by -C(=O)-O-* or -C(=O)-NH-* and a hydrocarbon group having 7 to 40 carbon atoms, wherein the bond represented by * is directly bonded to the hydrocarbon group having 7 to 40 carbon atoms, and
(b2) an acrylic monomer containing a divalent group represented by -C(=O)-O-* or -C(=O)-NH-* and a hydrocarbon group having 7 to 40 carbon atoms, wherein the bond represented by * is not directly bonded to the hydrocarbon group having 7 to 40 carbon atoms.

The acrylic monomer (b2) is a compound different from the acrylic monomer (b1).

For example, the acrylic monomer (b2) may be (meth)acrylate or (meth)acrylamide having an amide group, urethane group, or urea group that is not directly bonded to C(=O)-O- or C(=O)-NH- and directly bonded to the hydrocarbon group having 7 to 40 carbon atoms. The acrylic monomer (b2) is preferably acrylate containing, in addition to containing a divalent group represented by -C(=O)-O- or -C(=O)-NH-, an amide group that is not directly bonded to the divalent group (that is, an amide group bonded to the divalent group via another group) and directly bonded to the hydrocarbon group having 7 to 40 carbon atoms.

### (b1) Acrylic monomer

The acrylic monomer (b1) is preferably a compound represented by general formula:

CH₂=C(-X¹¹¹)-C(=O)-Y¹¹¹-R¹¹¹

wherein X¹¹¹ is a hydrogen atom, a monovalent organic group, or a halogen atom, Y¹¹¹ is -O- or -NH-, and R¹¹¹ is a hydrocarbon group having 7 to 40 carbon atoms.

The acrylic monomer (b1) is a long-chain acrylate ester monomer wherein Y¹¹¹ is -O- or a long-chain acrylamide monomer wherein Y¹¹¹ is -NH-.

For example, X¹¹¹ may be a hydrogen atom, a methyl group, a halogen excluding the fluorine atom, a substituted or unsubstituted benzyl group, or a substituted or unsubstituted phenyl group. Examples of X¹¹¹ include a hydrogen atom, a methyl group, a chlorine atom, a bromine atom, an iodine atom, and a cyano group. X¹¹¹ is preferably a hydrogen atom, a methyl group, or a chlorine atom.

Y¹¹¹ is -O- or -NH-.

R¹¹¹ is preferably a linear or branched hydrocarbon group. For example, the hydrocarbon group may be, in particular, a linear hydrocarbon group. The hydrocarbon group is preferably an aliphatic hydrocarbon group, particularly preferably a saturated aliphatic hydrocarbon group, and especially preferably an alkyl group. The number of carbon atoms of the hydrocarbon group is preferably 12 to 30, for example, 16 to 26, and particularly preferably 18 to 22 (or 18 to 24).

Specific examples of the long-chain acrylate ester monomer include lauryl (meth)acrylate, stearyl (meth)acrylate, icosyl (meth)acrylate, behenyl (meth)acrylate, stearyl α chloroacrylate, icosyl α chloroacrylate, and behenyl α chloroacrylate.

Specific examples of the long-chain acrylamide monomer include lauryl (meth)acrylamide, stearyl (meth)acrylamide, icosyl (meth)acrylamide, and behenyl (meth)acrylamide.

### (b2) Acrylic monomer

For example, the acrylic monomer (b2) may be (meth)acrylate or (meth)acrylamide having a divalent to tetravalent linking group having at least one group selected from -O- and -NH- between C(=O)-O- or C(=O)-NH- and the hydrocarbon group having 7 to 40 carbon atoms.

The acrylic monomer (b2) is preferably a compound represented by general formula:

CH₂=C(-X¹¹²)-C(=O)-Y¹¹²-Z¹¹¹(-Z¹¹²-R¹¹²)ₚ

wherein X¹¹² is a hydrogen atom, a monovalent organic group, or a halogen atom, Y¹¹² is -O- or -NH-, Z¹¹¹ is a direct bond, a divalent or trivalent hydrocarbon group having 1 to 5 carbon atoms, Z¹¹² is each independently a direct bond, a divalent to tetravalent linking group having at least one group selected from -O- and -NH-, R¹¹² is each independently a hydrocarbon group having 7 to 40 carbon atoms, and p is 1 or 2.

The acrylic monomer (b2) is a long-chain acrylate ester monomer wherein Y¹¹² is -O-, or a long-chain acrylamide monomer wherein Y¹¹² is -NH-.

For example, X¹¹² may be a hydrogen atom, a methyl group, a halogen atom excluding the fluorine atom, a substituted or unsubstituted benzyl group, or a substituted or unsubstituted phenyl group. Examples of X¹¹² include a hydrogen atom, a methyl group, a chlorine atom, a bromine atom, an iodine atom, and a cyano group. As the main chain of the polymer to be obtained is not rigid, the crystallinity of the side chain is not inhibited, so that X¹¹² is preferably a hydrogen atom, a methyl group, or a chlorine atom, more preferably a hydrogen atom or a methyl group, and particularly preferably a hydrogen atom.

Y¹¹² is -O- or -NH-.

Z¹¹¹ is a direct bond or a divalent or trivalent hydrocarbon group having 1 to 5 carbon atoms (in particular, an alkyl group), and may have a branched structure. The number of carbon atoms of Z¹¹¹ is 2 to 4, and particularly preferably 2. Specific examples of Z¹¹¹ include a direct bond, divalent groups such as -CH₂-, -CH₂CH₂-, -CH₂CH₂CH₂-, -CH₂CH₂CH₂CH₂-, and - CH₂CH₂CH₂CH₂CH₂-, and those having a branched structure (trivalent groups) such as -CH₂CH=, -CH₂(CH-)CH₂-, -CH₂CH₂CH=, - CH₂CH₂CH₂CH₂CH=, -CH₂CH₂(CH-)CH₂-, and -CH₂CH₂CH₂CH=. It is preferable that Z¹¹¹ be not a direct bond.

Specific examples of Z¹¹² include a direct bond, -O-, - NH-, -(O)ₖ-C(=O)-, -C(=O)-O-, -C(=O)-NH-, -NH-C(=O)-, -(O)ₖ-C(=O)-NH-, -NH-C(=O)-O-, -NH-C(=O)-NH-, -(O)ₖ-C₆H₆-, -(O)ₖ-(CH₂)ₘ-O-, -NH- (CH₂)ₘ-NH-, -(O)ₖ-(CH₂)ₘ-NH-, -NH- (CH₂)ₘ-O-, -(O)ₖ-(CH₂)ₘ-O-C(=O) -, -(O)ₖ-(CH₂)ₘ-C(=O)-O-, -NH- (CH₂)ₘ-O-C(=O) -, -NH-(CH₂)ₘ-C(=O)-O-, -(O)ₖ-(CH₂)ₘ-O-C(=O)-NH-, -(O)ₖ-(CH₂)ₘ-NH-C(=O)-O-, -(O)ₖ-(CH₂)ₘ-C(=O)-NH-, -(O)ₖ-(CH₂)ₘ-NH-C(=O)-, -(O)ₖ-(CH₂)ₘ-NH-C(=O)-NH-, -(O)ₖ-(CH₂)ₘ-O-C₆H₆-, -NH- (CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₆-, -NH-(CH₂)ₘ-NH-C₆H₆-wherein k is 0 or 1, and m is an integer of 1 to 5, and in particular, 2 or 4.

Z¹¹² is particularly preferably -(O)ₖ-, -NH-, -(O)ₖ-(CH₂)ₘ-O-C(=O)-, -(O)ₖ-(CH₂)ₘ-NH-C(=O)-, -(O)ₖ-(CH₂)ₘ-O-C(=O)-NH-, -(O)ₖ-(CH₂)ₘ-NH-C(=O)-O-, -(O)ₖ-(CH₂)ₘ-NH-C(=O)-NH- wherein k is 0 or 1, and m is an integer of 1 to 5, and in particular, 2 or 4.

Z¹¹¹ and Z¹¹² are not simultaneously direct bonds.

R¹¹² is preferably a linear or branched hydrocarbon group. For example, the hydrocarbon group may be, in particular, a linear hydrocarbon group. The hydrocarbon group is preferably an aliphatic hydrocarbon group, particularly preferably a saturated aliphatic hydrocarbon group, and especially preferably an alkyl group. The number of carbon atoms of the hydrocarbon group is preferably 12 to 30, for example, 16 to 26, and particularly preferably 18 to 22 (or 18 to 24).

The acrylic monomer (b2) is preferably CH₂=C(-X¹¹²)-C(=O)-O-(CH₂)ₘ-NH-C(=O)-R¹¹², CH₂=C(-X¹¹²)-C(=O)-O-R¹¹², or a combination thereof wherein X¹¹², m, and R¹¹² have the same meanings as above. The acrylic monomer (b2) is particularly preferably CH₂=C(-X¹¹²)-C(=O)-O-(CH₂)ₘ-NH-C(=O)-R¹¹².

The acrylic monomer (b2) can be produced by reacting hydroxyalkyl (meth)acrylate or hydroxyalkyl (meth)acrylamide with a long-chain alkylisocyanate. Examples of the long-chain alkylisocyanate include lauryl isocyanate, myristyl isocyanate, cetyl isocyanate, stearyl isocyanate, oleyl isocyanate, and behenyl isocyanate.

Alternatively, the acrylic monomer (b2) can also be produced by reacting (meth)acrylate having an isocyanate group on a side chain such as 2-methacryloyloxyethyl isocyanate with a long-chain alkyl amine or a long-chain alkyl alcohol. Examples of the long-chain alkylamine include lauryl amine, myristyl amine, cetyl amine, stearyl amine, oleyl amine, and behenyl amine. Examples of the long-chain alkyl alcohol include lauryl alcohol, myristyl alcohol, cetyl alcohol, stearyl alcohol, oleyl alcohol, and behenyl alcohol.

Specific examples of the acrylic monomer (b2) are as follows. The compounds having the following chemical formulas are acrylates in which the α-position is a hydrogen atom, and specific examples thereof may be methacrylate in which the α-position is a methyl group and acrylate in which the α-position is a chlorine atom. 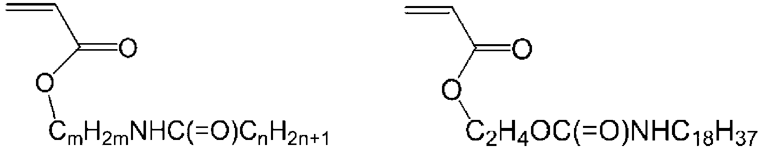 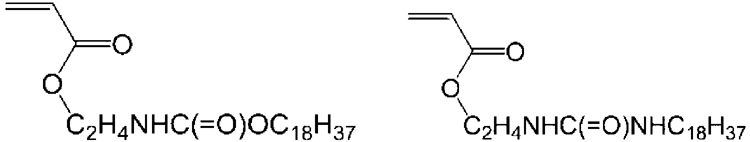 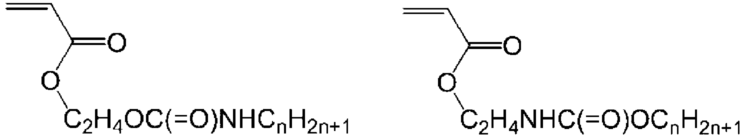 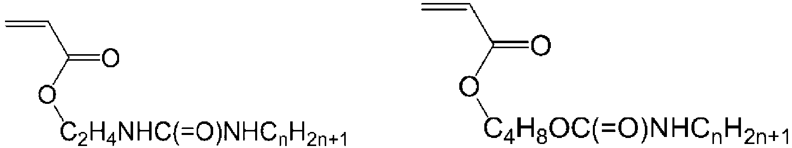 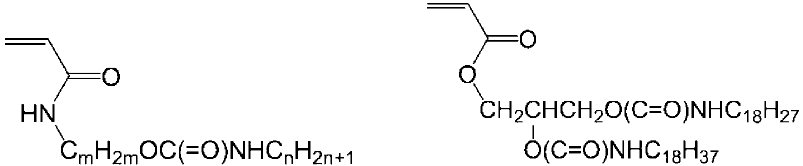 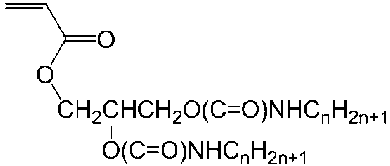 (In each formula, m is an integer of 1 to 5, and n is an integer of 7 to 40), and methacrylate in which the α-position is a methyl group and acrylate in which the α-position is a chlorine atom, in the above chemical formulas.

Specific typical examples of the acrylic monomer (b2) include palmitic acid amide ethyl (meth)acrylate, stearic acid amide ethyl (meth)acrylate, behenic acid amide ethyl (meth)acrylate, and myristic acid amide ethyl (meth)acrylate.

The acrylic monomer (b2) is particularly preferably an amide group-containing monomer represented by general formula:

R²²-C(=O)-NH-R²³-O-R²¹

wherein R²¹ is an organic residue having an ethylenically unsaturated polymerizable group, R²² is a hydrocarbon group having 7 to 40 carbon atoms, and R²³ is a hydrocarbon group having 1 to 5 carbon atoms.

R²¹ is an organic residue having an ethylenically unsaturated polymerizable group, and is not limited as long as having a double bond between carbon and carbon. Specific examples thereof include organic residues having an ethylenically unsaturated polymerizable group, such as - C(=O)CR²⁴=CH₂, -CHR²⁴=CH₂, and -CH₂CHR²⁴=CH₂, and examples of R²⁴ include a hydrogen atom or an alkyl group having 1 to 4 carbon atoms. R²¹ may have various organic groups other than the ethylenically unsaturated polymerizable group. Examples thereof include organic groups such as a chain hydrocarbon, a cyclic hydrocarbon, a polyoxyalkylene group, and a polysiloxane group, and these organic groups may be replaced by various substituents. R²¹ is preferably -C(=O)CR²⁴=CH₂.

R²² is a hydrocarbon group having 7 to 40 carbon atoms, and preferably an alkyl group, and examples thereof include a chain hydrocarbon and a cyclic hydrocarbon. Among these, a chain hydrocarbon is preferable, and a linear saturated hydrocarbon group is particularly preferable. The number of carbon atoms of R²² is 7 to 40, preferably 11 to 27, and particularly preferably 15 to 23.

R²³ is a hydrocarbon group having 1 to 5 carbon atoms, and preferably an alkyl group. The hydrocarbon group having 1 to 5 carbon atoms may be either linear or branched and may have an unsaturated bond, and is preferably linear. The number of carbon atoms of R²³ is preferably 2 to 4, and particularly preferably 2. R²³ is preferably an alkylene group.

For example, the amide group-containing monomer may be a monomer having a single type of R²¹ (e.g., only a compound in which R²¹ has 17 carbon atoms), or a monomer in which R²¹ is a combination of a plurality of types of R²¹ (e.g., a mixture of a compound in which R²¹ has 17 carbon atoms and a compound in which R²¹ has 15 carbon atoms) .

Examples of the amide group-containing monomer include carboxylic acid amide alkyl (meth)acrylate.

Specific examples of the amide group-containing monomer include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethylamide (meth)acrylate, oleic acid ethylamide (meth)acrylate, tertiarybutylcyclohexyl caproic acid amide ethyl (meth)acrylate, adamantane carboxylic acid ethylamide (meth)acrylate, naphthalene carboxylic acid amide ethyl (meth)acrylate, anthracene carboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether, or mixtures thereof.

The amide group-containing monomer is preferably stearic acid amide ethyl (meth)acrylate. For example, the amide group-containing monomer may be a mixture containing stearic acid amide ethyl (meth)acrylate. In the mixture containing stearic acid amide ethyl (meth)acrylate, the amount of stearic acid amide ethyl (meth)acrylate may be, for example, 55 to 99% by weight, preferably 60 to 85% by weight, and even more preferably 65 to 80% by weight based on the total weight of the amide group-containing monomer, and the remaining monomer may be, for example, palmitic acid amide ethyl (meth)acrylate.

### (c) Fluorine-free crosslinkable monomer

The polymer of the present disclosure may have a repeating unit derived from the fluorine-free crosslinkable monomer (c). The fluorine-free crosslinkable monomer (c) is a crosslinkable monomer containing no fluorine atom. For example, the fluorine-free crosslinkable monomer (c) may be a compound having at least two reactive groups and/or carbon-carbon double bonds and containing no fluorine. For example, the fluorine-free crosslinkable monomer (c) may be a compound having at least two carbon-carbon double bonds, or a compound having at least one carbon-carbon double bond and at least one reactive group. Examples of the reactive group include a hydroxyl group, an epoxy group, a chloromethyl group, a blocked isocyanate group, an amino group, and a carboxyl group. For example, the fluorine-free crosslinkable monomer (c) may be mono(meth)acrylate, (meth)diacrylate, or mono (meth) acrylamide having a reactive group. Alternatively, the fluorine-free crosslinkable monomer (c) may be di(meth)acrylate.

Examples of the fluorine-free crosslinkable monomer (c) include, but are not limited to, diacetone (meth)acrylamide, (meth)acrylamide, N-methylol (meth)acrylamide, hydroxymethyl (meth)acrylate, hydroxyethyl (meth)acrylate, 3-chloro-2-hydroxypropyl (meth)acrylate, 2-acetoacetoxyethyl (meth)acrylate, butadiene, isoprene, chloroprene, glycidyl (meth)acrylate, 1,6-hexanediol di(meth)acrylate, and neopentyl glycol di(meth)acrylate.

### (d) Halogenated olefin monomer

The polymer of the present disclosure may have a repeating unit derived from the halogenated olefin monomer (d), provided that the monomer (a) is excluded. The halogenated olefin monomer (d) is preferably an olefin having 2 to 20 carbon atoms replaced by 1 to 10 chlorine atoms, bromine atoms, or iodine atoms. The halogenated olefin monomer (d) is preferably a chlorinated olefin having 2 to 20 carbon atoms, and particularly preferably an olefin having 2 to 5 carbon atoms and 1 to 5 chlorine atoms. Preferable specific examples of the halogenated olefin monomer (d) include vinyl halides such as vinyl chloride, vinyl bromide, and vinyl iodide, and vinylidene halides such as vinylidene chloride, vinylidene bromide, and vinylidene iodide.

The polymer of the present disclosure can be formed of a monomer raw material, and the monomer raw material contains the monomer (a), and optionally contains at least any one selected from the group consisting of (b), (c), and (d). With respect to the polymer, each of the monomer (a) and, if present, (b), (c), and (d) (more specifically, repeating units derived from these monomers, the same applies hereafter) may be one or a mixture of two or more.

As an example of the mass proportion of each monomer in the polymer,
the proportion of the monomer (a) may be 0.1 to 99.9% by mass, for example, 20 to 90% by mass, and in particular, 50 to 80% by mass,
the proportion of the monomer (b) may be 0 to 99.8% by mass, for example, 0.5 to 50% by mass, and in particular, 1 to 30% by mass,
the proportion of the monomer (c) may be 0 to 99.8% by mass, for example, 0.1 to 10% by mass, and in particular, 0.1 to 5% by mass, and
the proportion of the monomer (d) may be 0 to 99.8% by mass, for example, 0.5 to 50% by mass, and in particular, 1 to 30% by mass, per 100% by mass in total of the monomers (a) to (d) .

It can be considered that these mass proportions are equal to the mass proportions in the total monomers used as the raw material of the polymer (the first monomer raw material).

In the present disclosure, the molecular weight of the polymer is not limited, and the mass average molecular weight determined by gel permeation chromatography in terms of polystyrene is, for example, 3,000 or more, and preferably in a range of 5,000 to 1,500,000.

The polymer of the present disclosure can be produced by any one of usual polymerization methods, and the conditions for the polymerization reaction can be arbitrarily selected. Examples of such polymerization methods include solution polymerization, suspension polymerization, and emulsion polymerization.

In the solution polymerization, a method in which the monomer is dissolved in an organic solvent in the presence of a polymerization initiator, and the resultant is subjected to nitrogen purging and then heated and stirred in a range of 30 to 120°C for 1 to 10 hours, is employed. Examples of the polymerization initiator include azobisisobutyronitrile, benzoylperoxide, di-t-butyl peroxide, lauryl peroxide, cumene hydroperoxide, t-butyl peroxypivalate, and diisopropyl peroxydicarbonate. The polymerization initiator is used in a range of 0.01 to 20 parts by mass, for example, 0.01 to 10 parts by mass per 100 parts by mass of the monomer.

The organic solvent is inactive to monomers and dissolves these, and for example, may be an ester (e.g., an ester having 2 to 30 carbon atoms, specifically, ethyl acetate or butyl acetate), a ketone (e.g., a ketone having 2 to 30 carbon atoms, specifically, methyl ethyl ketone or diisobutyl ketone), or an alcohol (e.g., an alcohol having 1 to 30 carbon atoms, specifically, isopropyl alcohol). Specific examples of the organic solvent include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in a range of 10 to 2,000 parts by mass, for example, 50 to 1,000 parts by mass per 100 parts by mass in total of the monomer.

In the emulsion polymerization, a method in which the monomer is emulsified in water in the presence of a polymerization initiator and an emulsifier, and the resultant is subjected to nitrogen purging and then stirred at a range of 50 to 80°C for 1 to 10 hours for polymerization, is employed. The polymerization initiator used is a water-soluble polymerization initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutyramidine-dihydrochloride, azobisisobutyronitrile, sodium peroxide, potassium persulfate, ammonium persulfate, 2,2'-azobis(2-methylpropionamidine)dihydrochloride, or 2,2'-azobis[2-(2-imidazol-2-yl)propane]dihydrochloride, or an oil-soluble polymerization initiator such as azobisisobutyronitrile, benzoyl peroxide, di-t-butyl peroxide, lauryl peroxide, cumene hydroperoxide, t-butyl peroxypivalate, diisopropyl peroxydicarbonate, or 2,2'-azobis[2-(2-imidazol-2-yl)propane]. The polymerization initiator is used in a range of 0.01 to 10 parts by mass per 100 parts by mass of the monomer.

To obtain a polymer-water dispersion liquid excellent in standing stability, it is desired that the monomer be made into fine particles in water and polymerized using an emulsifying apparatus such as a high-pressure homogenizer or an ultrasonic homogenizer that can impart powerful fracture energy. As the emulsifier, various anionic, cationic, and nonionic emulsifiers can be used, and are used in a range of 0.5 to 20 parts by mass per 100 parts by mass of the monomer. An anionic and/or a nonionic and/or a cationic emulsifier are/is preferably used. When monomers are not completely compatibilized, a compatibilizer that allows the monomers thoroughly to be compatibilized, for example, a water-soluble organic solvent or a monomer having a low molecular weight is preferably added. Addition of the compatibilizer enables emulsifiability and copolymerizability to be improved.

Examples of the water-soluble organic solvent include acetone, methyl ethyl ketone, ethyl acetate, propylene glycol, dipropylene glycol monomethyl ether, dipropylene glycol, tripropylene glycol, and ethanol, and the water-soluble organic solvent may be used in a range of 1 to 50 parts by mass, for example, 10 to 40 parts by mass per 100 parts by mass of water. Examples of the monomer having a low molecular weight include methyl methacrylate, glycidyl methacrylate, and 2,2,2-trifluoroethyl methacrylate, and the monomer having a low molecular weight may be used in a range of 1 to 50 parts by mass, for example, 10 to 40 parts by mass based on the total amount (100 parts by mass) of the monomer.

In the polymerization, a chain transfer agent may be used. The molecular weight of the polymer can be changed depending on the amount of the chain transfer agent used. Examples of the chain transfer agent include mercaptan group-containing compounds such as lauryl mercaptan, thioglycol, and thioglycerol (in particular, an alkyl mercaptan (e.g., having 1 to 30 carbon atoms)), and inorganic salts such as sodium hypophosphite and sodium hydrogen sulfite. The amount of the chain transfer agent used may be in a range of 0.01 to 10 parts by mass, for example, 0.1 to 5 parts by mass based on the total amount (100 parts by mass) of the monomer.

The water-repellent oil-resistant agent composition of the present disclosure contains the above polymer and a medium. The water-repellent oil-resistant agent composition of the present disclosure imparts excellent water-repellency or oil resistance to a substrate, and preferably imparts excellent water-repellency and oil resistance to a substrate.

The water-repellent oil-resistant agent composition of the present disclosure may be in a form of a solution, an emulsion (in particular, a water dispersion composition), or aerosol, preferably a solution or a water dispersion composition, and more preferably a water dispersion composition. The water-repellent oil-resistant agent composition contains a polymer (the active component of the water-repellent oil-resistant agent composition) and a medium (in particular, a liquid medium, for example, an organic solvent and/or water). The amount of the medium may be, for example, 5 to 99.9% by weight, and in particular, 10 to 80% by weight based on the water-repellent oil-resistant agent composition. In the water-repellent oil-resistant agent composition, the concentration of the polymer may be 0.01 to 95% by weight, for example, 5 to 50% by weight.

The water-repellent oil-resistant agent composition of the present disclosure can be used as an external treatment agent (surface-treating agent) or an internal treatment agent.

When the water-repellent oil-resistant agent composition of the present disclosure is an external treatment agent, it can be applied to an object to be treated by a conventionally known method. Usually, a method in which the water-repellent oil-resistant agent composition is diluted by being dispersed in an organic solvent or water, and the dilution is applied to the surface of the object to be treated by a known method such as dip coating, spray coating, or bubble coating, and dried, is employed. If required, the water-repellent oil-resistant agent composition may be applied with a suitable crosslinking agent (e.g., blocked isocyanate) and cured. Further, an insect repellent, a softening agent, an antibacterial agent, a flame retarder, an antistatic agent, a coating material fixing agent, an anti-wrinkle agent, or the like may be added to the water-repellent oil-resistant agent composition of the present disclosure and used in combination. For example, the concentration of the polymer in the treatment liquid to be in contact with the object to be treated may be 0.01 to 10% by weight (in particular, in the case of dip coating), and for example, 0.05 to 10% by weight.

Examples of the object to be treated that is treated with the treatment agent composition (water-repellent oil-resistant agent composition) of the present disclosure include fiber products, stone materials, filters (e.g., electrostatic filters), anti-dust masks, parts for fuel cells (e.g., gas diffusion electrodes and gas diffusion supports), glass, paper, wood, leather, fur, asbestos, bricks, cement, metals and oxides, ceramic materials, plastics, coating surfaces, and plaster. Various examples can be mentioned as the fiber product. Examples include animal and plant natural fibers such as cotton, hemp, wool, and silk, synthetic fibers such as polyamide, polyester, polyvinyl alcohol, polyacrylonitrile, polyvinyl chloride, and polypropylene, semi-synthetic fibers such as rayon and acetate, inorganic fibers such as glass fibers, carbon fibers, and asbestos fibers, and mixed fibers.

For example, the fiber product may be in any form of fiber, fabric, or the like.

The water-repellent oil-resistant agent composition of the present disclosure can also be used as a soil resistant agent, a release agent, or a mold release agent (e.g., an internal mold release agent or an external mold release agent). For example, the surface of the substrate can be easily stripped from another surface (another surface of the substrate, or the surface of another substrate).

The polymer can be applied to a fibrous substrate (e.g., the fiber product) by any one of the known methods for treating the fiber product with a liquid. When the fiber product is fabric, fabric may be dipped in a solution, or a solution may be applied or sprayed to fabric. The fiber product treated is dried to express water-repellency or oil resistance, and is preferably heated at, for example, 100°C to 200°C.

Alternatively, the polymer may be applied to the fiber product by a cleaning method, and for example, may be applied to the fiber product by washing application, a dry cleaning method, or the like.

The fiber product to be treated is typically fabrics, including woven fabrics, knitted fabrics, non-woven fabrics, and fabrics and carpets in the form of clothing, and may be fiber, yarn, or an intermediate fiber product (e.g., sliver or roving). The fiber product material may be natural fiber (e.g., cotton or wool), chemical fiber (e.g., viscose rayon or Lyocell), or synthetic fiber (e.g., polyester, polyamide, or acrylic fiber), or a mixture of fibers (e.g., a mixture of natural fiber and synthetic fiber). The fiber product is preferably carpet.

Alternatively, the fibrous substrate may be leather. To make leather hydrophobic and oleophobic, the produced polymer may be applied to leather from an aqueous solution or an aqueous emulsified product in various stages in leather processing, for example, during wet processing of leather or during finishing of leather.

Alternatively, the fibrous substrate may be paper. The produced polymer may be applied to the paper formed in advance or in various stages in papermaking, for example, during drying of paper.

The "treatment" means applying a treatment agent to the object to be treated by immersing, spraying, coating, or the like. By the treatment, the polymer that is the active ingredient of the treatment agent infiltrates the inside of the object to be treated and/or applied to the surface of the object to be treated.

When the water-repellent oil-resistant agent composition is an internal treatment agent, water-repellency or oil resistance can be imparted to a resin such as a thermoplastic resin by being added to the resin. In the production of a formed article of resin, the water-repellent oil-resistant agent composition can be used.

The polymer is obtained by removing the liquid medium from a solution containing the polymer (solution or dispersion). For example, the polymer can be obtained by reprecipitating the dispersion (aqueous dispersion or organic solvent dispersion) of the polymer using water or an organic solvent, and then drying the mixture.

For example, a formed article can be produced by a production method having a step of mixing a resin and the polymer to obtain a resin composition, and a step of forming the resin composition. The formed article is preferably produced by melt-kneading using an extruder or the like.

In general, the thermoplastic resin and the polymer are compatible in a molten state. Kneading can be performed by a conventionally known method such as a single-screw extruder, a twin-screw extruder, or a roll. The resin composition thus obtained is formed by extrusion forming, injection molding, compression forming, blow forming, press, or the like. The resin composition is formed into formed articles having various shapes. The obtained formed article may be further subjected to heat treatment with an oven, a drying furnace, or the like, after forming processing. For example, the formed article may have a single layer or a multilayer of two to ten layers, for example, three to five layers.

The formed article can be used in applications in which a thermoplastic resin is used, and in particular, in applications which are preferable to have excellent wiping easiness to contaminations and excellent scratch resistance. The applications of the formed article is automobiles (exterior parts and interior parts) (e.g., bumpers, instrument panels, door trims), household electric appliances (e.g., wash machines and refrigerators) (e.g., cases, doors of refrigerators, trays, vegetable chambers), various cases, buildings (interior and parts) (e.g., banisters, wallpaper, desks, chairs, toilet seats and toilet seat covers, and bathtubs), electronic devices (e.g., smartphone cases), drains, pipes, dishes, floor materials, gasoline tanks, fuel hoses, and OA equipment. Among these, interior parts for automobiles, interior parts for household electric appliances, and buildings are even more preferable.

While embodiments have been described above, it will be understood that various changes in form and detail can be made without departing from the gist and scope of the claims.

The main embodiments of the present disclosure are as follows.

<1> According to the first aspect of the present disclosure, provided is a polymer comprising a repeating unit derived from a monomer (a) represented by general formula:

   R¹-R²-(CH₂)ₚ-O-R³

   wherein
   R¹ is -CH₃, -CH₂F, -CHF₂, -CH₂I, or -CHFI,
   R² is an alkylene group having 1 to 49 carbon atoms consisting of unit represented by -CFH-, an alkylene group having 2 to 49 carbon atoms consisting of unit represented by -CFH- and unit represented by -CH₂-, or an alkylene group having 3 to 49 carbon atoms consisting of unit represented by -CFH-, unit represented by -CH₂-, and unit represented by -CHI-,
   p is an integer of 0 to 2, and
   R³ is an organic residue having an ethylenically unsaturated polymerizable group.
<2> According to the second aspect of the present disclosure, provided is the polymer according to the first aspect, wherein R² is an alkylene group having 2 to 10 carbon atoms.
<3> According to the third aspect of the present disclosure, provided is the polymer according to the first or second aspect, wherein R² is an alkylene group represented by general formula:

   -(CFH)ₙ₁-

   wherein n1 is an integer of 2 to 10.
<4> According to the fourth aspect of the present disclosure, provided is the polymer according to any one of the first to third aspects, wherein R³ is a group represented by general formula:

   CH₂=C(-X)-C(=O)-Y-Z-

   wherein
   X is hydrogen atom, methyl group, or a halogen atom,
   Y is -O- or -NH-, and
   Z is a direct bond or a divalent organic group.
<5> According to the fifth aspect of the present disclosure, provided is the polymer according to the fourth aspect, wherein
   Z is a direct bond, an aliphatic group having 1 to 10 carbon atoms, an aromatic group or cycloaliphatic group having 6 to 18 carbon atoms, a - (CH₂)ₘ-N(R¹)SO₂-(CH₂)ₙ- group, a - CH₂CH(OZ¹)CH₂- group, a -CH₂CH(OZ¹)CH₂-(Ph-O) - group, a -(CH₂)ₙ-Ph-O- group, a -(CH₂)ₘ-SO₂-(CH₂)ₙ- group, a -(CH₂)ₘ-OC(=O)N(R¹)-(CH₂)ₙ- group, a -(CH₂)ₘ-N(R¹)C(=O)O-(CH₂)ₙ- group, a -(CH₂)ₘ-C(=O)N(R¹)-(CH₂)ₙ- group, a - (CH₂)ₘ-(R¹)NC(=O)-(CH₂)ₙ- group, a - (CH₂)ₘ-(R¹)NC(=O)N(R¹)-(CH₂)ₙ- group, or a -(CH₂)ₘ-S-(CH₂)ₙ- group, wherein Z¹ is hydrogen atom or R¹C(=O)-, R¹ is an alkyl group having 1 to 18 carbon atoms, Ph is a phenylene group, m is an integer of 1 to 10, and n is an integer of 0 to 10, in each formula.
<6> According to the sixth aspect of the present disclosure, provided is the polymer according to any one of the first to fifth aspects, wherein
   the polymer further comprises a repeating unit derived from at least one selected from the group consisting of:
   (b) a fluorine-free non-crosslinkable monomer,
   (c) a fluorine-free crosslinkable monomer, and
   (d) a halogenated olefin monomer.
<7> According to the seventh aspect of the present disclosure, provided is the polymer according to any one of the first to sixth aspects, wherein the polymer further comprises a repeating unit derived from a monomer represented by general formula:

   CH₂=C(-X¹¹)-C(=O)=Y¹¹-R¹¹ₙ

   wherein
   X¹¹ is hydrogen atom, methyl group, or a halogen atom,
   Y¹¹ is a divalent to tetravalent linking group having at least one group selected from -O- and -NH-,
   R¹¹ is a hydrocarbon group having 7 to 40 carbon atoms, and
   n is an integer of 1 to 3.
<8> According to the eighth aspect of the present disclosure, provided is a water-repellent oil-resistant agent composition comprising the polymer according to any one of the first to seventh aspects, and a liquid medium.
<9> According to a ninth aspect of the present disclosure, provided is the water-repellent oil-resistant agent composition according to the eighth aspect, wherein the liquid medium is water, an organic solvent, or a mixture of water and an organic solvent.
<10> According to the tenth aspect of the present disclosure, provided is the water-repellent oil-resistant agent composition according to the eighth or ninth aspect, wherein the water-repellent oil-resistant agent composition is a water dispersion composition.
<11> According to the eleventh aspect of the present disclosure, provided is the water-repellent oil-resistant agent composition according to any one of the eighth to tenth aspects, wherein the water-repellent oil-resistant agent composition is an external treatment agent or an internal treatment agent.
<12> According to the twelfth aspect of the present disclosure, provided is a substrate treated with the water-repellent oil-resistant agent composition according to any one of the eighth to eleventh aspects.
<13> According to the thirteenth aspect of the present disclosure, provided is a fiber product treated with the water-repellent oil-resistant agent composition according to any one of the eighth to eleventh aspects.

### EXAMPLES

Next, embodiments of the present disclosure will now be described by way of Experimental Examples, but the present disclosure is not limited only to the Experimental Examples.

Experimental Example 1 Synthesis of 1,1,2-trifluoro-2-iodoethane

To a 300 mL pressure resistant vessel, 37.1 g of iodine and 16.1 g of IF₅ were added, and the vessel was sealed. The vessel was cooled to -78°C, 10 g of (E)-1,2-difluoroethene was then introduced into the vessel, and the vessel was heated at 80°C for 20 hours. After the vessel was cooled with ice water, the content in the pressure resistant vessel was washed with water and then further washed with a 5% aqueous Na₂S₂O₄ solution to give 5.8 g of the title compound.
¹⁹F NMR (282 MHz, CDCl₃): δ -169.1 - -169.4 (m, 1F), -124.0 - - 124.3 (m, 1F).
¹H NMR (400 MHz,CDCl3): δ 6.79 (d with fine coupling, J = 48.0 Hz, 1H), 7.26 (td with fine coupling, J = 54.8, 3.6 Hz, 1H). LRMS (EI 70 eV) m/z (%): 210(M+, 100), 190 (8), 171 (3), 83 (62), 64 (37), 51 (14).

### Experimental Example 2 Synthesis of 4,5,5-trifluoro-2-iodopentanol

To a 10 mL pressure resistant vessel, 1.84 g of 1,1,2-trifluoro-2-iodoethane, 509 mg of allyl alcohol, and 288 mg of azobisisobutyronitrile were added. Then, the vessel was heated at 80°C for 22 hours. After the vessel was cooled with ice water, the content in the pressure resistant vessel was analyzed by gas chromatography mass spectrometry, and it was found that the title compound was produced in an area ratio of 75.9% relative to an area ratio of 24.1% of 1,1,2-trifluoro-2-iodoethane as the raw material.
LRMS (EI 70 eV) m/z (%): 268 (M+, 1), 251 (1), 185 (2), 141 (95), 73 (100), 51 (38).

### Experimental Example 3 Synthesis of 7,8,8-trifluoro-5-iodooctan-1-ol

To a 10 mL pressure resistant vessel, 1.00 g of 1,1,2-trifluoro-2-iodoethane, 477 mg of 5-hexen-1-ol, and 235 mg of azobisisobutyronitrile were added. Then, the vessel was heated at 80°C for 22 hours. After the vessel was cooled with ice water, the content in the pressure resistant vessel was analyzed by gas chromatography mass spectrometry, and it was found that the title compound was produced in an area ratio of 66.8% (two isomers in total) relative to an area ratio of 37.2% of 1,1,2-trifluoro-2-iodoethane as the raw material.
LRMS (EI 70 eV) m/z (%): 293 ([M-OH]+, 100), 259 (5), 207 (25), 207 (25), 155 (34).

### Experimental Example 4 Synthesis of 4,5,5-trifluoro-2-iodopentane methacrylate

To a 10 mL glass vessel, 200 mg of 4,5,5-trifluoro-2-iodopentanol was added. After the vessel was purged with nitrogen, 1.1 mL of dichloromethane and 0.15 mL of pyridine were added to the vessel. After the vessel was cooled to 0°C, 0.18 mL of methacryloyl chloride was added, and the mixture was stirred for 1 hour. The content was analyzed by gas chromatography mass spectrometry, and it was found that the title compound was produced in an area ratio of 77.7% (two isomers in total) relative to an area ratio of 22.3 of 4,5,5-trifluoro-2-iodopentanol as the raw material.
LRMS (EI 70 eV) m/z (%): 250 ([M-CH2=C(Me)COO]+, 100), 209 (95), 69 (90).

### Experimental Example 5 Synthesis of 7,8,8-trifluorooctan-1-ol

To a 10 mL glass vessel, a mixed solution of 200 mg of 7,8,8-trifluoro-5-iodooctan-1-ol and 0.4 mL of methanol, and 67.5 mg of zinc were added. 0.33 mL of a 2 M aqueous hydrochloric acid solution was added. After the mixture was stirred for 6 hours, the content was analyzed by gas chromatography mass spectrometry, and it was found that the title compound was produced in an area ratio of 75.6% relative to an area ratio of 24.4% of 7,8,8-trifluoro-5-iodooctan-1-ol as the raw material.
LRMS (EI 70 eV) m/z (%): 167 ([M-OH]+, 100), 127 (54), 51 (4).

### Experimental Example 6 Synthesis of 7,8,8-trifluorooctane methacrylate

To a 10 mL glass vessel, 119 mg of 7,8,8-trifluorooctan-1-ol was added, the vessel was purged with nitrogen, and then 0.6 mL of dichloromethane and 51.3 µL of pyridine were added to the vessel. The vessel was cooled to 0°C, 62.4 µL of methacryloyl chloride was added thereto, and the mixture was stirred for 1 hour. The content was analyzed by gas chromatography mass spectrometry, and it was found that the raw materials were lost and the title compound was produced. LRMS (EI 70 eV) m/z (%): 252 ([M]⁺, 2), 166 (18), 87 (100), 69 (52).

### Experimental Example 7 Oligomerization reaction of 1,1,2-trifluoro-2-iodoethane with (E)-1,2-difluoroethene

To a 30 mL pressure resistant vessel, 1.00 g of 1,1,2-trifluoro-2-iodoethane and 0.35 mL of 2-ethylhexanoyl(tert-butyl)peroxide were added, the vessel was sealed and cooled to -78°C, and 1.5 g of (E)-1,2-difluoroethene was then introduced. The vessel was heated at 80°C for 24 hours. Then, the vessel was cooled with ice water, the content in the pressure resistant vessel was then analyzed by gas chromatography mass spectrometry, and it was found that H-CF₂CHF-(CHFCHF)-I, H-CF₂CHF-(CHFCHF)₂-I, and H-CF₂CHF-(CHFCHF)₃-I were respectively produced in an area ratio of 36.1% (four isomers in total), 20.5% (eight isomers in total), and 21.3% (a plurality of isomers in total) relative to an area ratio of 22.2% of 1,1,2-trifluoro-2-iodoethane as the raw material.
H-CF₂CHF- (CHFCHF)-I: LRMS (EI 70 eV) m/z (%): 274 (M+,87), 191 (11), 159 (30), 147 (76), 83 (45), 77 (100), 51 (82). H-CF₂CHF- (CHFCHF)₂-I: LRMS (EI 70 eV) m/z (%): 338 (M+, 18), 211 (4), 191 (27), 159 (22), 147 (27), 83 (38), 77 (84), 51 (100).
H-CF₂CHF- (CHFCHF)₃-I: LRMS (EI 70 eV) m/z (%): 402 (M+, 2), 191 (23), 159 (34), 147 (18), 83 (36), 77 (89), 51 (100).

It is obvious from the common general knowledge that, when the methacrylates obtained in Experimental Examples 4 and 6 are used, the polymers can be easily obtained by using a radical initiator. These polymers can be preferably used as the water-repellent oil-resistant agent compositions.

Further, as the results of Experimental Examples 2 to 6, it is obvious from the common general knowledge that, when the compound obtained in Experimental Example 7 is used, the (meth) acrylate having H-CF₂CHF- (CHFCHF)ₙ- (CH₂)ₚ- can be easily synthesized.

## Claims

1. A polymer comprising a repeating unit derived from a monomer (a) represented by general formula:
R¹-R²-(CH₂)ₚ-O-R³
wherein
R¹ is -CH₃, -CH₂F, -CHF₂, -CH₂I, or -CHFI,
R² is an alkylene group having 1 to 49 carbon atoms consisting of unit represented by -CFH-, an alkylene group having 2 to 49 carbon atoms consisting of unit represented by -CFH- and unit represented by -CH₂-, or an alkylene group having 3 to 49 carbon atoms consisting of unit represented by -CFH-, unit represented by -CH₂-, and unit represented by -CHI-,
p is an integer of 0 to 2, and
R³ is an organic residue having an ethylenically unsaturated polymerizable group.

2. The polymer according to claim 1, wherein R² is an alkylene group having 2 to 10 carbon atoms.

3. The polymer according to claim 1 or 2, wherein R² is an alkylene group represented by general formula:
-(CFH)ₙ₁-
wherein n1 is an integer of 2 to 10.

4. The polymer according to any one of claims 1 to 3, wherein R³ is a group represented by general formula:
CH₂=C(-X)-C(=O)-Y-Z-
wherein
X is hydrogen atom, methyl group, or a halogen atom,
Y is -O- or -NH-, and
Z is direct bond or a divalent organic group.

5. The polymer according to claim 4, wherein Z is direct bond, an aliphatic group having 1 to 10 carbon atoms, an aromatic group or cycloaliphatic group having 6 to 18 carbon atoms, a -(CH₂)ₘ-N(R¹)SO₂-(CH₂)ₙ- group, a -CH₂CH(OZ¹)CH₂-group, a -CH₂CH(OZ¹)CH₂- (Ph-O) - group, a -(CH₂)ₙ-Ph-O- group, a -(CH₂)ₘ-SO₂-(CH₂)ₙ- group, a -(CH₂)ₘ-OC(=O)N(R¹)-(CH₂)ₙ- group, a - (CH₂)ₘ-N(R¹)C(=O)O-(CH₂)ₙ- group, a -(CH₂)-C(=O)N(R¹)-(CH₂)ₙ-group, a - (CH₂)ₘ-(R¹)NC(=O)-(CH₂)ₙ- group, a - (CH₂)ₘ-(R¹)NC(=O)N(R¹)-(CH₂)ₙ- group, or a -(CH₂)ₘ-S-(CH₂)ₙ- group, wherein Z¹ is hydrogen atom or R¹C(=O)-, R¹ is an alkyl group having 1 to 18 carbon atoms, Ph is a phenylene group, m is an integer of 1 to 10, and n is an integer of 0 to 10, in each formula.

6. The polymer according to any one of claims 1 to 5, wherein the polymer further comprises a repeating unit derived from at least one selected from the group consisting of:
(b) a fluorine-free non-crosslinkable monomer,
(c) a fluorine-free crosslinkable monomer, and
(d) a halogenated olefin monomer.

7. The polymer according to any one of claims 1 to 6, wherein the polymer further comprises a repeating unit derived from a monomer represented by general formula:
CH₂=C(-X¹¹)-C(=O)-Y¹¹-R¹¹ₙ
wherein
X¹¹ is hydrogen atom, methyl group, or a halogen atom,
Y¹¹ is a divalent to tetravalent linking group having at least one group selected from -O- and -NH-,
R¹¹ is a hydrocarbon group having 7 to 40 carbon atoms, and
n is an integer of 1 to 3.

8. A water-repellent oil-resistant agent composition comprising the polymer according to any one of claims 1 to 7, and a liquid medium.

9. The water-repellent oil-resistant agent composition according to claim 8, wherein the liquid medium is water, an organic solvent, or a mixture of water and an organic solvent.

10. The water-repellent oil-resistant agent composition according to claim 8 or 9, wherein the water-repellent oil-resistant agent composition is a water dispersion composition.

11. The water-repellent oil-resistant agent composition according to any one of claims 8 to 10, wherein the water-repellent oil-resistant agent composition is an external treatment agent or an internal treatment agent.

12. A substrate treated with the water-repellent oil-resistant agent composition according to any one of claims 8 to 11.

13. A fiber product treated with the water-repellent oil-resistant agent composition according to any one of claims 8 to 11.
